# EUROPEAN PATENT APPLICATION

(11) **EP 4 796 414 A1**
(43) Date of publication of application: **26.08.2026**
(21) Application number: 23956181.4
(22) Date of filing: 19.10.2023
(51) Int. Cl.: B62D 1/183, B62D 1/06, F16H 19/04

(54) **STEERING WHEEL ASSEMBLY**

(71) Applicant: LG Electronics Inc., Yeongdeungpo-gu Seoul 07336 (KR)
(72) Inventor: LEE, Taeyun, Seoul 06772 (KR); LEE, Wonkyu, Seoul 06772 (KR); YOON, Hyunjin, Seoul 06772 (KR); KIM, Dongeun, Seoul 06772 (KR)
(74) Representative: Vossius & Partner Patentanwälte Rechtsanwälte mbB
(86) International application number: PCT/KR2023/016232
(87) International publication number: WO 2025/084459

(57) **Abstract**

Disclosed is a steering wheel assembly. The steering wheel assembly according to the present disclosure may include: a frame; a housing extending in a direction intersecting the frame: an arm adjacent to an end of the housing and extending in a direction intersecting the housing; and a steering wheel coupled to the end of the arm, wherein the arm may be foldably coupled to the housing.

## Description

### TECHNICAL FIELD

The present disclosure relates to a steering wheel assembly. More particularly, the present disclosure relates to a steering wheel assembly for a vehicle.

### BACKGROUND ART

A vehicle is a means of transportation that moves by operation by a driver. Recently, research and development of autonomous vehicles capable of driving on their own without driver operation have been actively underway. In line with this trend, much research has been conducted on technologies that can provide not only driving convenience but also various experiences, such as in-car entertainment, to the occupants of a vehicle.

As a conventional steering wheel occupies a space in front of a driver, there were restrictions on the activities of a driver and occupant(s) inside a vehicle.

### DETAILED DESCRIPTION OF INVENTION

### TECHNICAL PROBLEMS

An object of the present disclosure is to solve the aforementioned problems and other problems.

Another object may be to provide a structure that can hide a steering wheel from the view of an occupant inside a vehicle.

Another object may be to provide a structure that can electrically hide a steering wheel assembly or provide it to a driver.

Another object may be to provide a structure that can minimize a storage space of a steering wheel assembly.

Another object may be to provide a structure that can improve the driver's ease of operation of a steering wheel.

### TECHNICAL SOLUTION

According to an aspect of the present disclosure for achieving the above or other objects, a steering wheel assembly may include: a frame; a housing extending in a direction intersecting with the frame: an arm adjacent to an end of the housing and extending in a direction intersecting with the housing; and a steering wheel coupled to the end of the arm, wherein the arm may be foldably coupled to the housing.

A vehicle may include: the steering wheel assembly; and wheels mounted on the frame of the steering wheel assembly.

### EFFECT OF INVENTION

The effects of the steering wheel assembly according to the present disclosure are described as follows.

According to at least one of the embodiments of the present disclosure, there may be provided a structure that can hide a steering wheel from the view of an occupant inside a vehicle.

According to at least one of the embodiments of the present disclosure, there may be provided a structure that can electrically hide a steering wheel assembly or provide it to a driver.

According to at least one of the embodiments of the present disclosure, there may be provided a structure that can minimize a storage space of a steering wheel assembly.

According to at least one of the embodiments of the present disclosure, there may be provided a structure that can improve the driver's ease of operation of a steering wheel.

Further scope of the applicability of the present disclosure will become apparent from the following detailed description. However, since various changes and modifications within the spirit and scope of the present disclosure are clearly understood by those skilled in the art, specific embodiments such as the detailed description and preferred embodiments of the present disclosure should be understood as being given merely as examples.

### BRIEF DESCRIPTION OF THE DRAWING

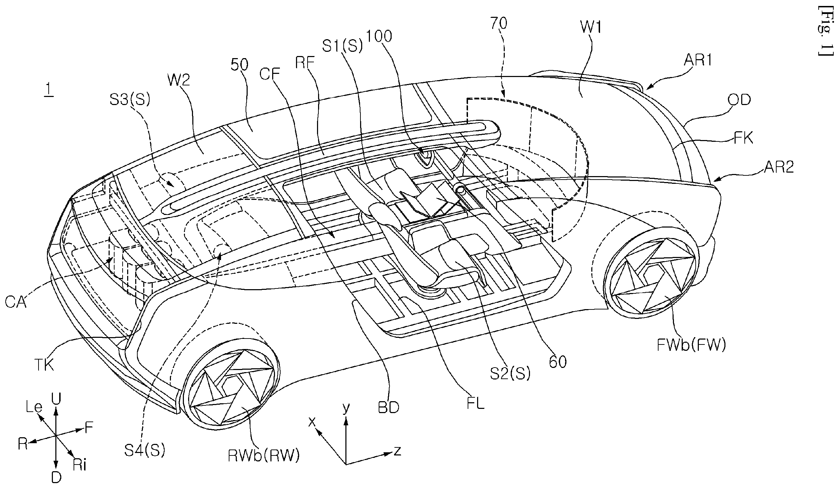

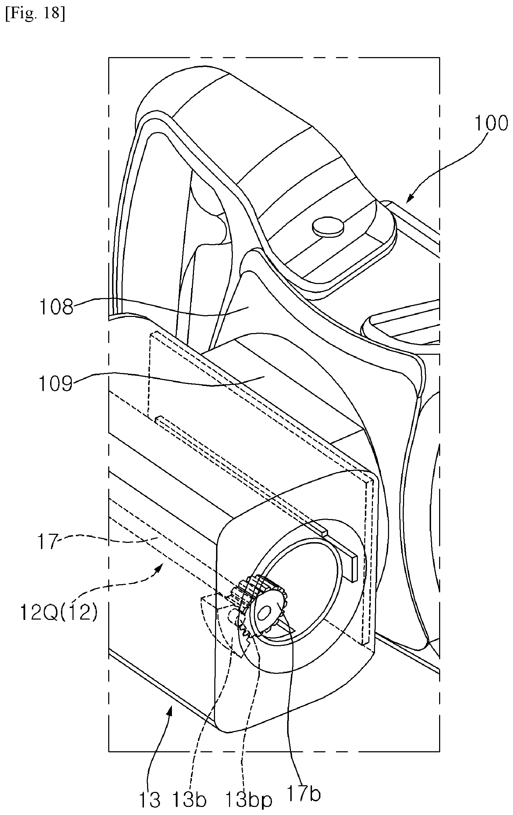

FIGS. 1 to 26 are drawings illustrating examples of a steering wheel assembly according to embodiments of the present disclosure.

### MODE FOR CARRYING OUT THE INVENTION

In the following description, the same or similar components are assigned the same reference numbers, and overlapping descriptions with respect to the same reference numbers may be omitted.

In the following description, suffixes such as "module" and "unit" may be used to refer to elements or components. Use of such suffixes herein is merely intended to facilitate description of the specification, and the suffixes do not have any special meaning or function.

In the following description, when it is determined that a detailed description of a well-known technology may obscure the gist of an embodiment of the present disclosure, a detailed description of the well-known technology may be omitted. In the following description, the accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

Terms such as first and second used in the following description may be used. These terms are only for distinguishing the elements from other elements, and the essence, sequence, or order of the elements are not limited by the terms.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

The direction indications of up U, down D, left Le, right Ri, front F, and rear R shown in the drawings are only for the convenience of explanation, and the technical concepts disclosed in this specification are not limited thereby.

Referring to FIG. 1, a vehicle 1 may use gasoline, diesel, gas, electricity, or hydrogen as fuel. The vehicle 1 may be able to perform autonomous driving.

A frame FL may form a floor of the vehicle 1. A body BD that constitutes the roof and side panel of the vehicle 1 may be assembled to a frame FL or formed as one body with the frame FL. The frame FL may be referred to as a floor FL.

A chassis may be assembled to the frame FL. The chassis may include a power unit, such as an engine using fossil fuels as an energy source or a motor using electricity as an energy source, a power train system, a suspension system, a steering system such as a steering wheel 100, a brake system, and wheels FW, RW. The wheels FW, RW may include tires.

For example, a pair of front wheels FW may be mounted on the left and right sides of the frame FL while being adjacent to the front end of the frame FL. For example, a pair of rear wheels RW may be mounted on the left and right sides of the frame FL while being adjacent to the rear end of the frame FL.

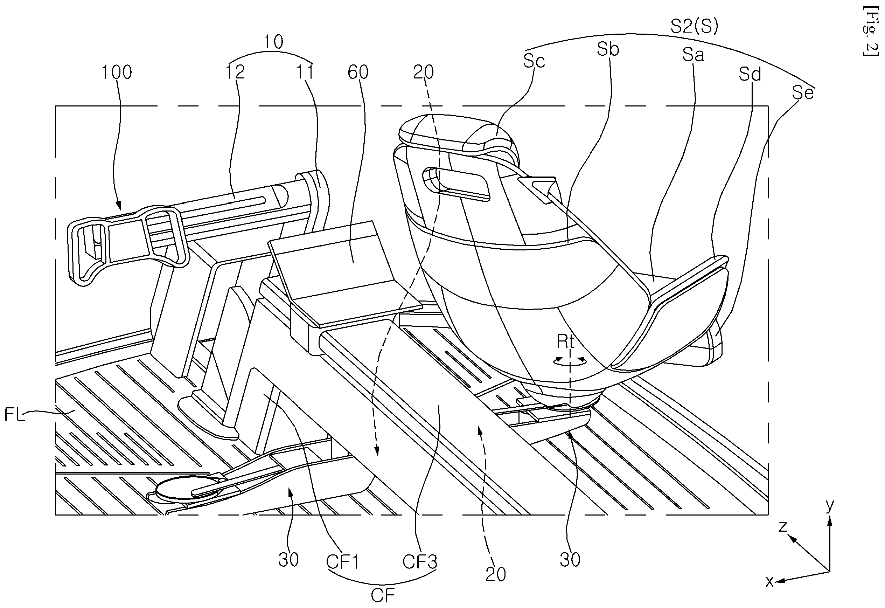

Referring to FIG. 2, a central frame CF may be positioned on the frame FL. A central frame CF may extend long in the front-rear direction from the center of the frame FL. One end or both ends of the central frame CF may be fixed to the frame FL, and a portion between both ends of the central frame CF may be spaced apart from the frame FL. The central frame CF may include a fixed part CF1 and a supporting portion CF3.

A supporting portion CF3 may be extended in the front-rear direction, and spaced upward from the frame FL. The supporting portion CF3 may be referred to as a bar CF3. The fixed part CF1 may be formed at one end or both ends of the supporting portion CF3.

The fixed part CF1 may intersect with the frame FL, and may be fixed to the frame FL. The fixed part CF1 may be bent toward the frame FL from the front end and/or rear end of the supporting portion CF3, and may be fixed to the frame FL. The angle between the fixed part CF1 and the supporting portion CF3 may be a right angle or an obtuse angle. The fixed part CF1 may be referred to as a pole CF1.

A seat S may be coupled to the supporting portion CF3 of the central frame CF through a connecting member 20, 30. The seat S may include a cushion Sa, a back rest Sb, a head rest Sc, an arm rest Sd, and a leg rest Se.

There may be one or more seats S. For example, a first seat S1 and a second seat S2 may be coupled to the left and right sides of the supporting portion CF3 while being adjacent to the front end of the supporting portion CF3, and a third seat S3 and a fourth seat S4 may be coupled to the left and right sides of the supporting portion CF3 while being adjacent to the rear end of the supporting portion CF3. The first seat S1 and the second seat S2 may be referred to as first-row seats S1, S2 or front seats S1, S2. The first seat S1 may be referred to as a driver's seat S1, and the second seat S2 may be referred to as a passenger seat S2. The third seat S3 and the fourth seat S4 may be referred to as second-row seats S3, S4 or back seats S3, S4.

A driver may sit in the driver's seat S1 and drive the vehicle 1 by using the steering wheel 100 (see FIG. 1). The steering wheel 100 may be mounted on a bracket 10 coupled to the central frame CF, and may be spaced upward from the floor FL.

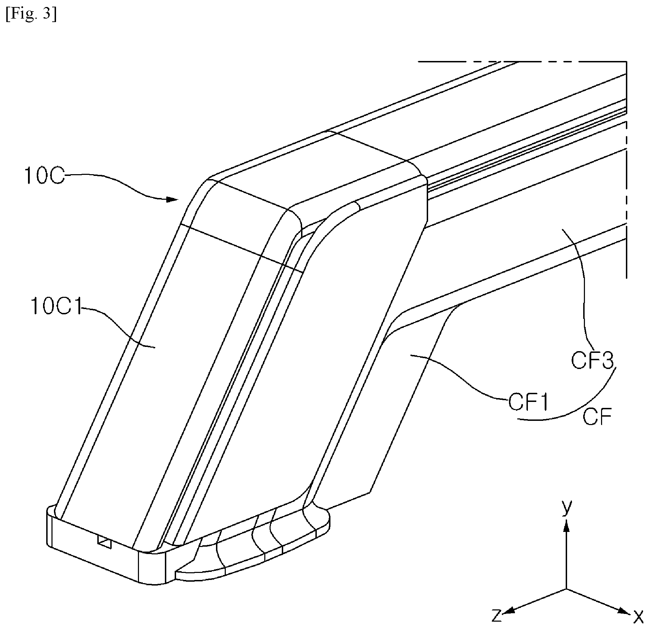

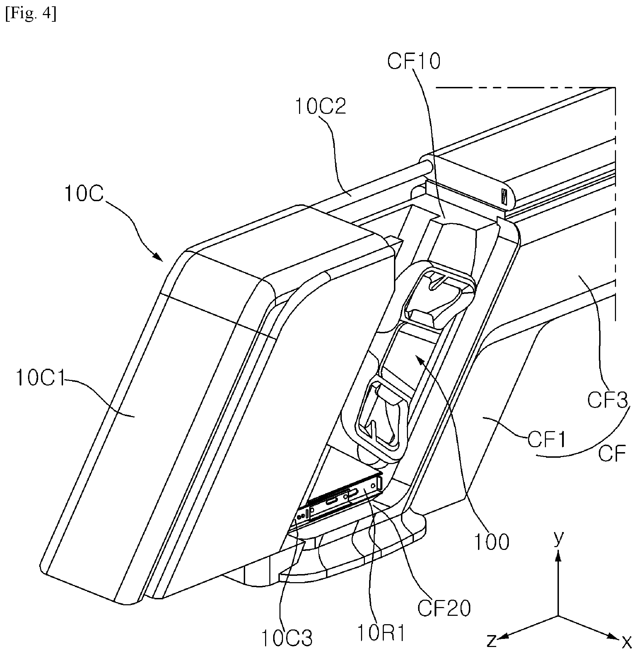

Referring to FIGS. 3 and 4, the steering wheel 100 may be mounted on a front part CF10 of the fixed part CF1. A cover 10C1 of a cover assembly 10C may cover the front part CF10 and the steering wheel 100 or expose them to the outside.

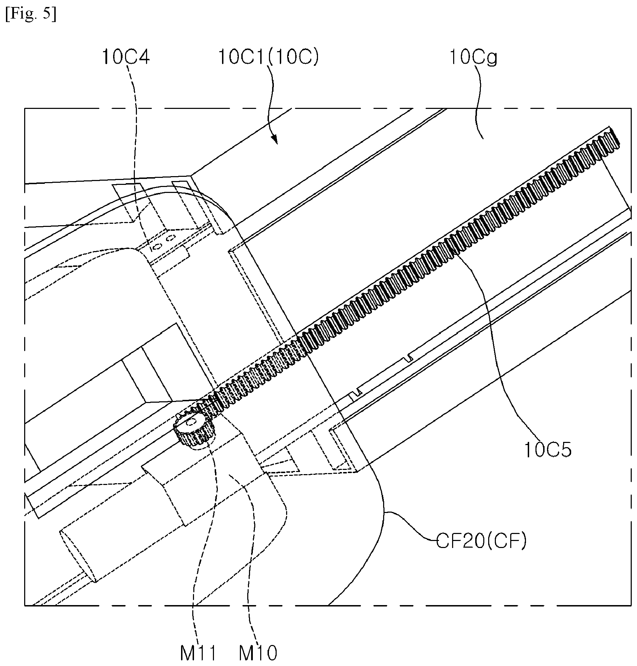

Referring to FIGS. 5 to 7, the cover 10C1 of the cover assembly 10C may be positioned on a base CF20 of the central frame CF. The base CF20 may form the lower end of the fixed part CF1, and may be coupled to the frame FL (see FIG. 2).

A rod 10C2 may extend from the rear end of the cover 10C1 toward the supporting portion CF3 of the central frame CF while being adjacent to the upper side of the cover 10C1. The rod 10C2 may be inserted into the supporting portion CF3, and may move along the supporting portion CF3.

A first fixer 10C3 may protrude rearward from the rear end of the cover 10C1 while being adjacent to the left side of the cover 10C1. A first guide rail 10R1 may be fixed on the base CF20, and may be extended in the front-rear direction. The first fixer 10C3 may be movably coupled to the first guide rail 10R1.

A second fixer 10C4 may protrude rearward from the rear end of the cover 10C1 while being adjacent to the right side of the cover 10C1. The second guide rail 10R2 may be fixed on the base CF20, and may be extended in the front-rear direction. The second fixer 10C4 may be movably coupled to the second guide rail 10R2.

A rack 10C5 may be formed on the bottom of the cover 10C1, and may be extended in the front-rear direction. A bottom groove 10Cg may be formed on the bottom of the cover 10C1, and the rack 10C5 may be formed in the bottom groove 10Cg.

A motor M10 may be mounted on the base CF20. The motor M10 may be an electric motor that is able to adjust the rotational direction, rotational speed, and rotational angle of a rotation axis. A pinion M11 may be fixed to the rotation axis of the motor M10, and may be engaged with the rack 10C5.

Accordingly, when the motor M10 is operated, the cover 10C1 may move back and forth on the base CF20, and may cover or expose the front part CF10 and the steering wheel 100 to the outside.

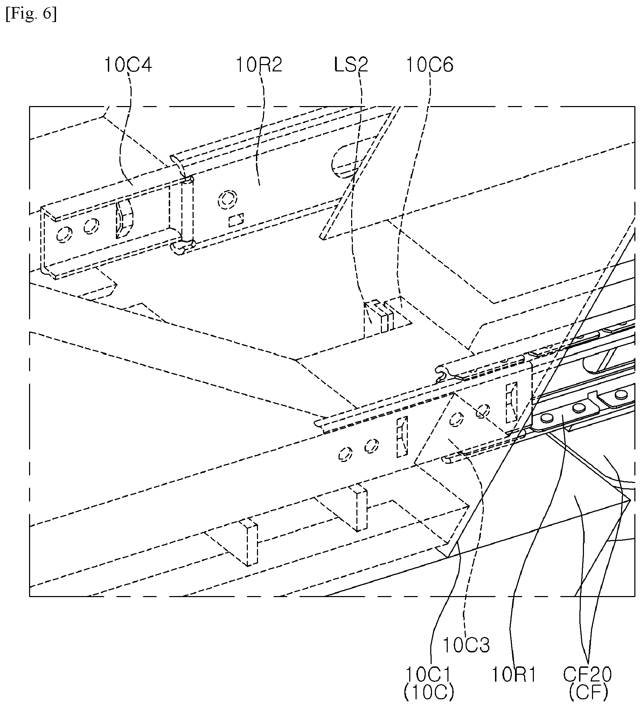

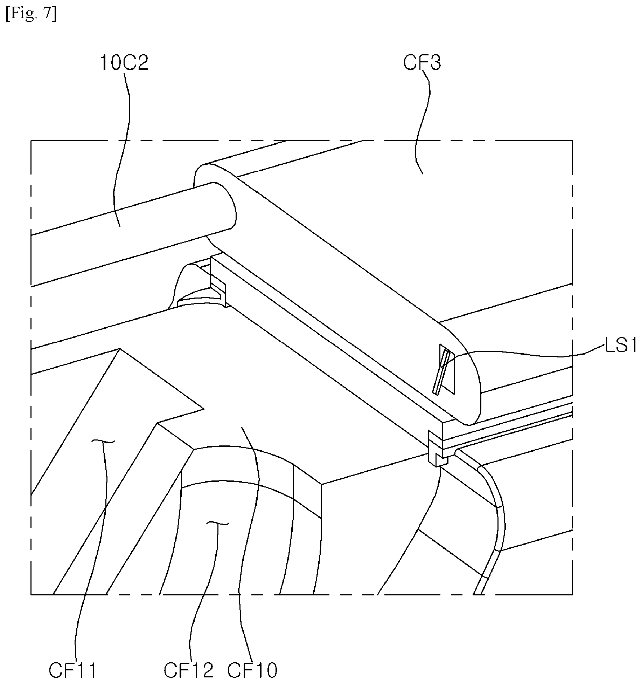

A first limit switch LS1 (see FIG. 7) may be mounted on the front end of the supporting portion CF3 of the central frame CF. The first limit switch LS1 may detect contact with the rear end of the cover 10C1 that moves rearward. A second limit switch LS2 (see FIG. 6) may be mounted on the base CF20. The second limit switch LS2 may detect contact with a portion 10C6 of the cover 10C1 that moves forward.

Accordingly, a controller may stop the movement of the cover 10C1 facing rearward, when the cover 10C1 touches the first limit switch LS1. In addition, the controller may stop the movement of the cover 10C1 facing forward, when the portion 10C6 touches the second limit switch LS2.

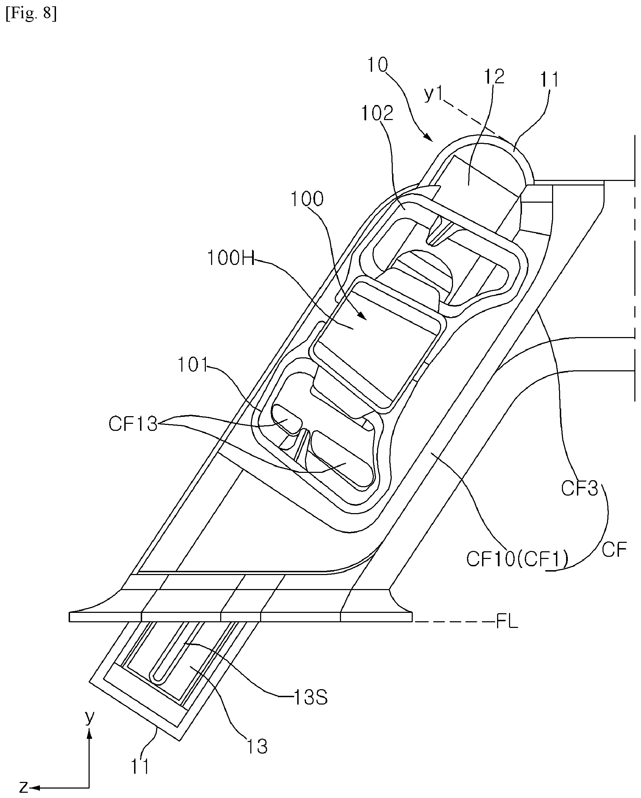

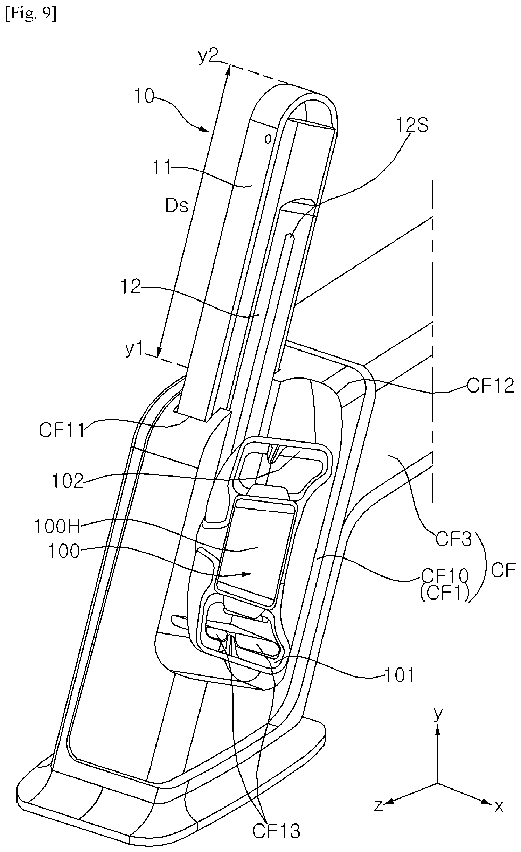

Referring to FIGS. 8 and 9, a foldable bracket 10 may be positioned in a first groove CF11 formed in the front part CF10 of the central frame CF. The first groove CF11 may be formed by penetrating the front part CF10 along the length direction of the front part CF10. The foldable bracket 10 may move in both directions along the first groove CF11. The foldable bracket 10 may be referred to as a foldable module 10, a bracket 10, or a supporter 10.

The steering wheel 100 may be positioned in a second groove CF12 formed in the front part CF10 of the central frame CF. The second groove CF12 may be adjacent to the first groove CF11, and may be open to the left of the front part CF10. A holder CF13 may be formed in the second groove CF12, and may hold the steering wheel 100. For example, a first rim 101 of the steering wheel 100 may be engaged with the holder CF13.

The steering wheel assembly described above and below may include a foldable bracket 10 and a steering wheel 100.

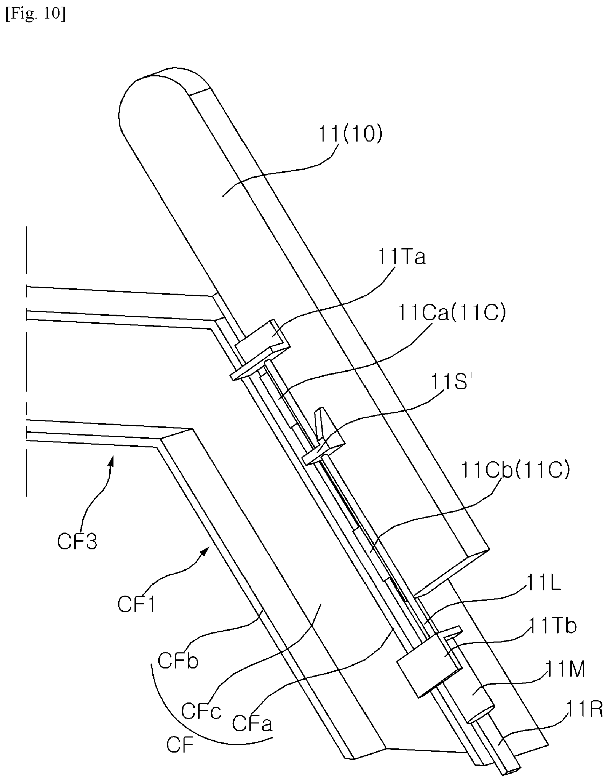

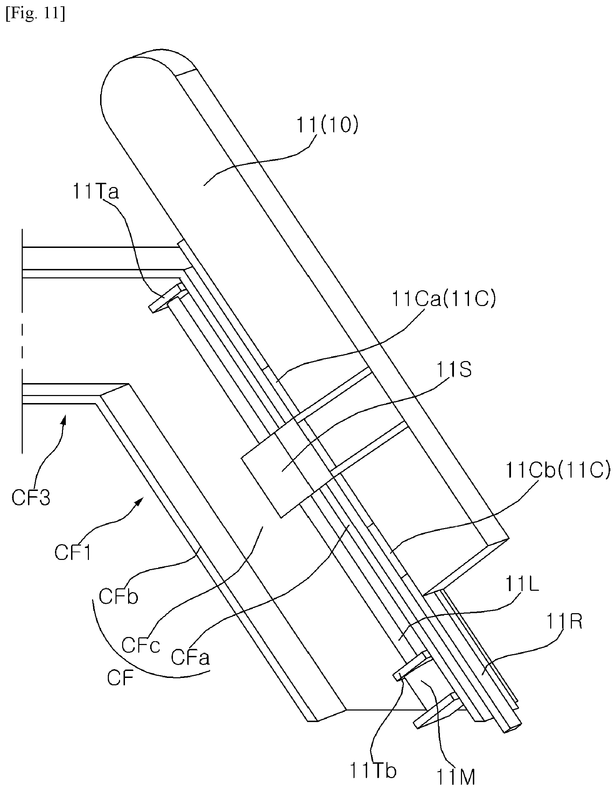

Referring to FIGS. 10 and 11, the central frame CF may have an overall H-beam shape. The central frame CF may include an upper flange CFa, a lower flange CFb, and a web CFc. The web CFc may have a thin plate shape formed long along the length direction of the central frame CF. The upper flange CFa may extend from the upper side of the web CFc in a direction intersecting with the web CFc, and may form the upper surface of the central frame CF. The lower flange CFb may extend from the lower side of the web CFc in a direction intersecting with the web CFc, and may form the lower surface of the central frame CF. The upper flange CFa, the lower flange CFb, and the web CFc may form the aforementioned supporting portion CF3 and fixed part CF1.

The foldable bracket 10 may be a linear actuator or a linear stage. The foldable bracket 10 may include a housing 11, a motor 11M, a lead screw 11L, a slider 11S, a guide rail 11R, and a coupling part 11C.

The motor 11M may be mounted on the upper flange CFa of the fixed part CF1. The motor 11M may be an electric motor that is able to adjust the rotational direction, rotational speed, and rotational angle of the rotation axis. The lead screw 11L may be fixed to the rotation axis of the motor 11M, and may be extended along the fixed part CF1. Male screw threads may be formed on the outer surface of the lead screw 11L.

For example, a slider 11S' (see FIG. 10) may protrude from the housing 11, and may have a flange shape. Alternatively, the slider 11S' may be coupled to the housing 11. A lead screw 11L may pass through the slider 11S'. Female screw threads may be formed on the inner surface of the hole in the slider 11S' through which the lead screw 11L passes, and may engage with the male screw threads of the lead screw 11L.

As another example, the slider 11S (see FIG. 11) may protrude from the housing 11, and may have a block shape. Alternatively, the slider 11S may be coupled to the housing 11. The lead screw 11L may pass through the slider 11S. The female screw threads may be formed on the inner surface of the hole of the slider 11S through which the lead screw 11L passes, and may engage with the male screw threads of the lead screw 11L.

The guide rail 11R may be positioned between the housing 11 and the fixed part CF1, and may be fixed to the upper flange CFa. The guide rail 11R may extend along the upper flange CFa. The coupling part 11C may be formed in the housing 11, and may be movably coupled to the guide rail 11R. For example, a pair of coupling parts 11Ca, 11Cb may be spaced apart from each other along the guide rail 11R. The rotation of the housing 11 and the slider 11S'; 11S may be restricted by the coupling part 11C coupled to the guide rail 11R.

Accordingly, when the lead screw 11L is rotated in a first rotational direction by the motor 11M, the slider 11S', 11S and the housing 11 may move upward along the lead screw 11L. When the lead screw 11L is rotated in a second rotational direction opposite to the first rotational direction by the motor 11M, the slider 11S'; 11S and the housing 11 may move downward along the lead screw 11L. The movement of the slider 11S', 11S and the housing 11 may be restricted when the slider 11S', 11S comes into contact with the first stopper 11Ta or the second stopper 11Tb. The first stopper 11Ta may be fixed to the upper flange CFa while being adjacent to the upper end of the upper flange CFa. The second stopper 11Tb may be fixed to the upper flange CFa while being adjacent to the lower end of the upper flange CFa.

Referring again to FIGS. 8 and 9, an arm 12, 13 of the foldable bracket 10 may be inserted into the housing 11, and may move along the first groove CF11 together with the housing 11. The maximum movement distance D10 of the housing 11 may be a distance between the bottom dead center y1 and the top dead center y2 of the foldable bracket 10.

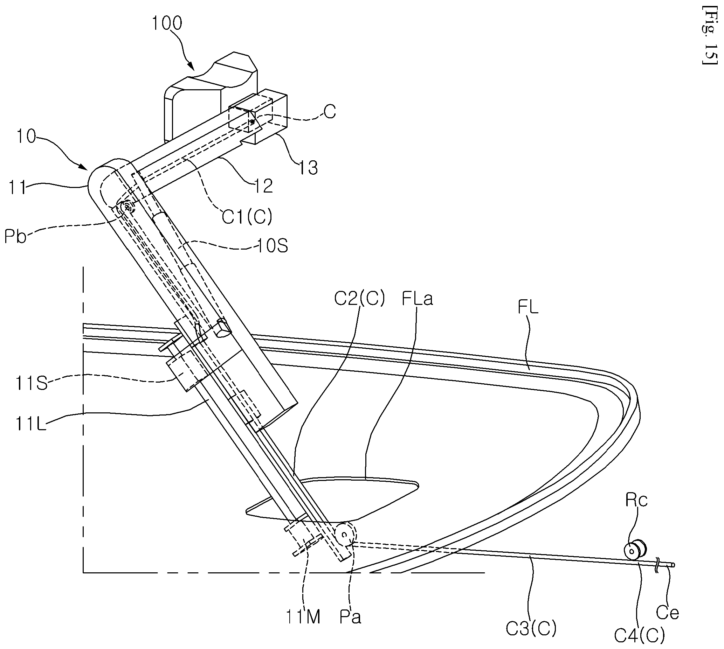

A portion of the foldable bracket 10 (see FIG. 8) in a first state may be inserted into the inside of the frame FL through a hole FLa (see FIG. 15) of the frame FL. At this time, the steering wheel 100 mounted in the second groove CF12 may be positioned on a first arm 12 of the arm 12, 13.

The foldable bracket 10 (see FIG. 9) in the second state may escape from the frame FL through the first groove CF11. At this time, the steering wheel 100 mounted in the second groove CF12 may be positioned on a second arm 13 of the arms 12, 13.

Even if the foldable bracket 10 moves from the first state to the second state or from the second state to the first state, the steering wheel 100 may not move.

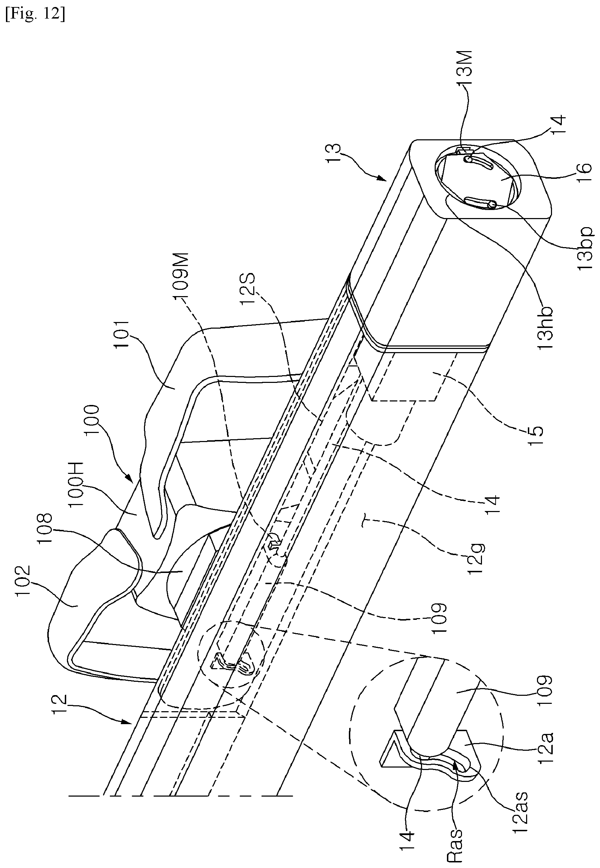

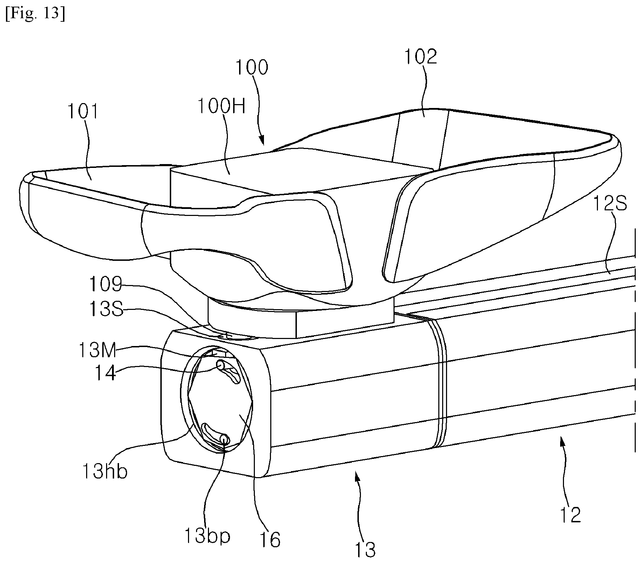

Referring to FIGS. 12 and 13, the first arm 12 may have a long extended bar, box, or cylinder shape. A first guide slot 12S may be formed on one side surface of the first arm 12, and may be formed long along the length direction of the first arm 12. The second arm 13 may have a bar or box shape shorter than the first arm 12, and may be coupled to the distal end of the first arm 12. A second guide slot 13S may be formed on one side surface of the second arm 13, and may be formed long along the length direction of the second arm 13. The first and second guide slots 12S, 13S may be connected in a row.

The steering wheel 100 may face one side surface of the arm 12, 13, and may include a coupling part 109 that is inserted into the first guide slot 12S.

The guide shaft 14 may extend along the length direction of the first and second guide slots 12S, 13S, and may be positioned inside the first and second arms 12, 13. The guide shaft 14 may be coupled to the coupling part 109 of the steering wheel 100 so as to be movable along the length direction of the guide shaft 14.

Accordingly, in response to the movement of the housing 11 and the arm 12, 13, the coupling part 109 of the steering wheel 100 mounted in the second groove CF12 may be moved relatively from one end of guide slots 12S, 13S toward the other end (see FIG. 8 and 9). At this time, the steering wheel 100 may slide relatively on the first and second arms 12, 13. For example, a slope of about 6 degrees may be formed near the boundary between the first and second arms 12, 13, and as a result, the steering wheel 100 may smoothly pass near the boundary between the first and second arms 12, 13.

A first magnet 109M may be mounted on one side of the coupling part 109 facing toward the second arm 13. A second magnet 13M may be mounted on the second arm 13 while being adjacent to the distal end of the second arm 13. The polarity of the first magnet 109M may be opposite to the polarity of the second magnet 13M. Alternatively, any one of the first magnet 109M and the second magnet 13M may be replaced with a steel plate. The first magnet 109M of the steering wheel 100 on the second arm 13 may be magnetically coupled to the second magnet 13M, and as a result, the steering wheel 100 may be coupled to the second arm 13.

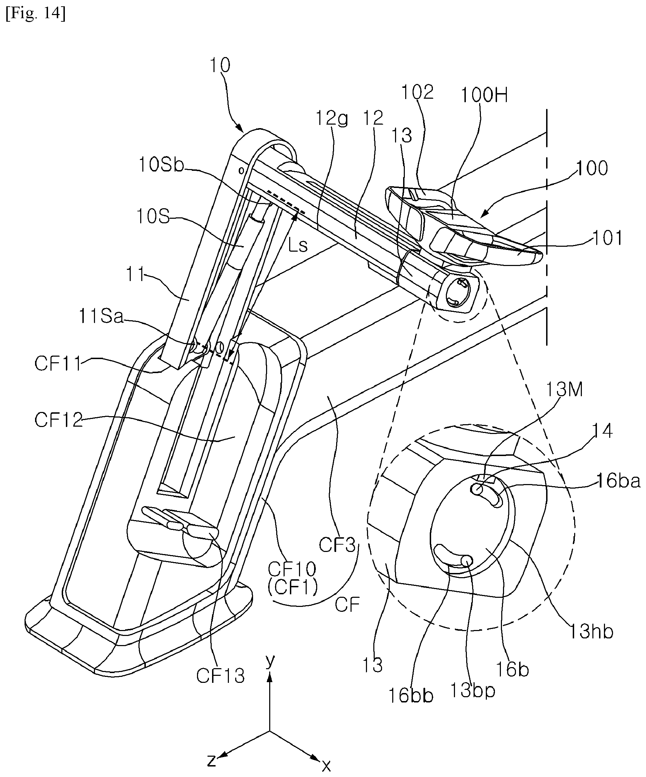

Referring to FIG. 14, a supporter 10S may be positioned between the housing 11 and the first arm 12. The first arm 12 may be opened toward the housing 11, and the supporter 10S may be inserted into an opening 12g of the first arm 12. One end 10Sa of the supporter 10S may be pivotally coupled to the housing 11, and the other end 10Sb of the supporter 10S may be pivotally coupled to the first arm 12 while being adjacent to one end of the first arm 12. The one end of the first arm 12 may be adjacent to the upper end of the housing 11. The length Ls of the supporter 10S may be variable.

For example, the supporter 10S may have a configuration of a general linear actuator. Specifically, the motor of the supporter 10S may be an electric motor that is able to adjust the rotational direction, rotational speed, and rotational angle. A lead screw may be connected to the rotation axis of the motor, and may extend long along the length of the supporter 10S. A slider may engage with the screw threads formed on the outer surface of the lead screw, and may move along the lead screw. The housing of the supporter 10S may be equipped with the slider, may form the outer shape of the supporter 10S, and may be longer or shorter in the length direction of the supporter 10S. That is, when the motor is operated, the housing may become longer as various ends of the housing are exposed, or the housing may become shorter as the various ends are concealed.

Accordingly, as the length Ls of the supporter 10S increases, the first and second arms 12, 13 may spread apart from the housing 11. The supporter 10S may support the first and second arms 12, 13 spread apart from the housing 11. For example, the angle between the housing 11 and the first and second arms 12, 13 may be a right angle or similar. As the length Ls of the supporter 10S decreases, the first and second arms 12, 13 may be folded toward the housing 11, and the supporter 10S may be housed in the opening 12g of the first arm 12.

Referring to FIG. 15, a cable C may electrically connect the steering wheel 100 and an in-vehicle device. The in-vehicle device may be referred to as an electronic device. The steering wheel 100 may transmit or receive data or signals to and from the in-vehicle device, or receive power, through the cable C. The cable C may be a bundle of multiple strands. For example, the in-vehicle device may be arranged inside a frunk FK of the vehicle 1. The frunk FK is a compound word of front and trunk.

One end Ci of the cable C may be connected to the steering wheel 100, and the other end of the cable C may be connected to the in-vehicle device. A portion of the cable C may pass through a hole FLa formed in the frame FL. A portion between the both ends of the cable C may be wired to the housing 11 and arms 12, 13 of the foldable bracket 10, and another portion may be wired under the frame FL. The cable C may include a first portion C1 between one end Ci of the cable C and a second pulley Pb described below, a second portion C2 between the second pulley Pb and a first pulley Pa, a third portion C3 between the first pulley Pa and a tension pulley Rc, and a fourth portion C4 between the tension pulley Rc and the other end Ce of the cable C.

The first pulley Pa may be mounted on the frame FL or the fixed part CF1 (see FIG. 11) while being adjacent to the hole FLa of the frame FL, and a portion of the cable C between the third part C3 and the second part C2 may be engaged with the first pulley Pa.

The second pulley Pb may be mounted on the housing 11 or the arm 12, 13 while being adjacent to the upper end of the housing 11 (i.e. while being adjacent to the rotational center axis of the arm 12, 13 with respect to the housing 11), and a portion of the cable C between the second part C2 and the first part C1 may be engaged with the second pulley Pb.

The tension pulley Rc may be positioned between the first pulley Pa and the other end Ce of the cable C. The tension pulley Rc may be mounted on the frame FL from below. The cable C may be connected to or wound around the tension pulley Rc, and the tension pulley Rc may pull the cable C in a direction from one end Ci of the cable C toward the other end Ce. The tension pulley Rc may be a constant torque [force] spring. The tension pulley Rc may be referred to as a spring Rc, a pulley Rc, or a roller Rc.

In response to the rise (see FIGS. 8 and 9 in order) of the foldable bracket 10, the cable C may be pulled toward one end Ci of the cable C. At this time, since the cable C is bent 180 degrees by the second pulley Pb and the steering wheel 100 is held by the holder CF13, the length of the pulled cable C may correspond to twice the movement distance D10 of the foldable bracket 10.

In response to the lowering (see FIGS. 9 and 8 in order) of the foldable bracket 10, the cable C may be pulled toward the other end Ce of the cable C by the tension pulley Rc. Accordingly, the cable C may be kept taut without tangling within the foldable bracket 10. In addition, the arrangement space of the cable C within the foldable bracket 10 may be minimized.

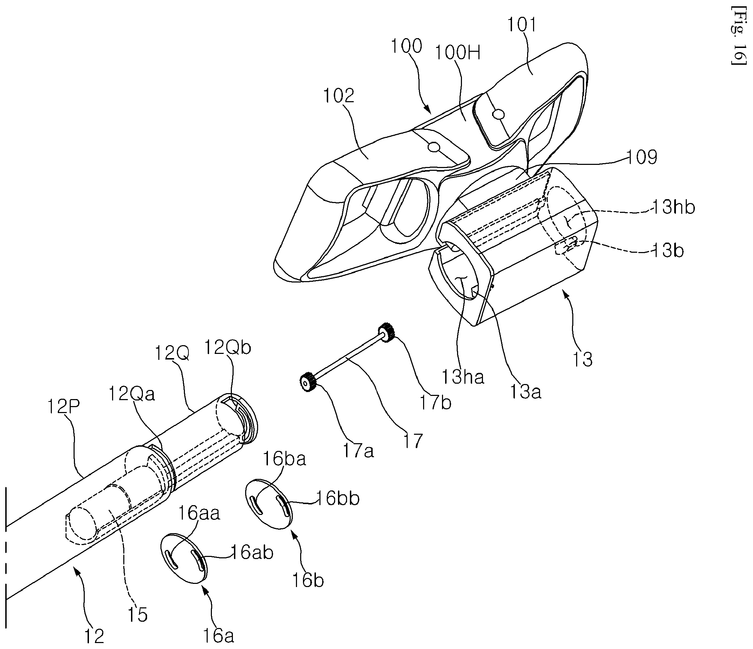

Referring to FIGS. 16 to 18, the first arm 12 may include a first part 12P and a second part 12Q. The second part 12Q may form the distal end of the first arm 12, and may have a smaller diameter than the first part 12P. The first part 12P may be referred to as the arm body 12P, and the second part 12Q may be referred to as the fixing part 12Q.

A first guide plate 16a may be inserted into the interior of the second part 12Q through a first hole 12Qa adjacent to one end of the second part 12Q, and may be fixed to the second part 12Q. The first guide plate 16a may have a circular plate shape. A first guide slot 16aa may be formed in the first guide plate 16a, and may have an arc shape. A second guide slot 16ab may be formed in the first guide plate 16a, and may have an arc shape. The first and second guide slots 16aa, 16ab may be adjacent to the edge of the first guide plate 16a, and may be spaced apart from each other in the circumferential direction of the first guide plate 16a.

A second guide plate 16b may be inserted into the interior of the second part 12Q through a second hole 12Qb adjacent to the other end of the second part 12Q, and may be fixed to the second part 12Q. The second guide plate 16b may have a circular plate shape. The first guide slot 16ba may be formed in the second guide plate 16b, and may have an arc shape. The second guide slot 16bb may be formed in the second guide plate 16b, and may have an arc shape. The first and second guide slots 16ba, 16bb may be adjacent to the edge of the second guide plate 16b, and may be spaced apart from each other in the circumferential direction of the second guide plate 16b.

The first and second guide slots 16aa, 16ab of the first guide plate 16a and the first and second guide slots 16ba, 16bb of the second guide plate 16b may have the same shape, and may be aligned with each other. The first and second guide plates 16a, 16b may have the same shape.

The guide shaft 14 may pass through the first guide slot 16aa of the first guide plate 16a and the first guide slot 16ba of the second guide plate 16b. A rib 12a may be formed on the inner surface of the first arm 12, and may provide a slot 12as into which one end of the guide shaft 14 is movably inserted (see FIG. 12). The slot 12as may have the same curvature Ras as the first guide slots 16aa, 16ba (see FIG. 12).

The motor 15 may be mounted inside the first part 12P, and may be adjacent to the second part 12Q. The motor 15 may be an electric motor that is able to adjust the rotational direction, rotational speed, and rotational angle of the rotation axis.

A rotation shaft 17 may be positioned inside the second part 12Q, and may extend along the length direction of the second part 12Q. The rotation shaft 17 may be fixed to the rotation axis of the motor 15. For example, one end of the rotation shaft 17 may be fixed to the rotation axis of the motor 15 by passing through the first guide plate 16a. A first gear 17a may be fixed to one end of the rotation shaft 17, and a second gear 17b may be fixed to the other end of the rotation shaft 17.

The second arm 13 may wrap around the second part 12Q, and may be rotatably coupled to the second part 12Q. A hollow space of the second arm 13 may be a hole 13ha, 13hb formed by passing through both ends of the second arm 13. A first rack 13a and a second rack 13b may be formed on the inner surface of the second arm 13. The first rack 13a may be positioned in the first hole 12Qa of the second part 12Q, and may mesh with the first gear 17a. A first pin 13ap may protrude from the first rack 13a into the second guide slot 16ab of the first guide plate 16a. A second rack 13b may be positioned in the second hole 12Qb of the second part 12Q, and may mesh with the second gear 17b. A second pin 13bp may protrude from the second rack 13b into the second guide slot 16bb of the second guide plate 16b.

In response to the operation of the motor 15, when the rotation shaft 17 rotates in the first rotational direction, the first and second gears 17a, 17b of the rotation shaft 17 may rotate the first and second racks 13a, 13b and the second arm 13 in the first rotational direction RD1. At this time, the steering wheel 100 coupled to the second arm 13 may also be rotated in the first rotational direction RD1, and the guide shaft 14 coupled to the coupling part 109 of the steering wheel 100 may move along the first guide slots 16aa, 16ba. In addition, the first and second pins 13ap, 13bp may also move along the second guide slots 16ab, 16bb. The guide slots 16aa, 16ba, 16ab, 16bb may come into contact with the guide shaft 14 and the pins 13ap, 13bp to restrict the movement of the guide shaft 14 and the pins 13ap, 13bp.

In response to the operation of the motor 15, when the rotation shaft 17 rotates in the second rotational direction, the first and second gears 17a, 17b of the rotation shaft 17 may rotate the first and second racks 13a, 13b and the second arm 13 in the second rotational direction RD2 opposite to the first rotational direction RD1. At this time, the steering wheel 100 coupled to the second arm 13 may also be rotated in the second rotational direction RD2, and the guide shaft 14 coupled to the coupling part 109 of the steering wheel 100 may move along the first guide slots 16aa, 16ba. In addition, the first and second pins 13ap, 13bp may also move along the second guide slots 16ab, 16bb. The guide slots 16aa, 16ba, 16ab, 16bb may come into contact with the guide shaft 14 and the pins 13ap, 13bp to restrict the movement of the guide shaft 14 and the pins 13ap, 13bp.

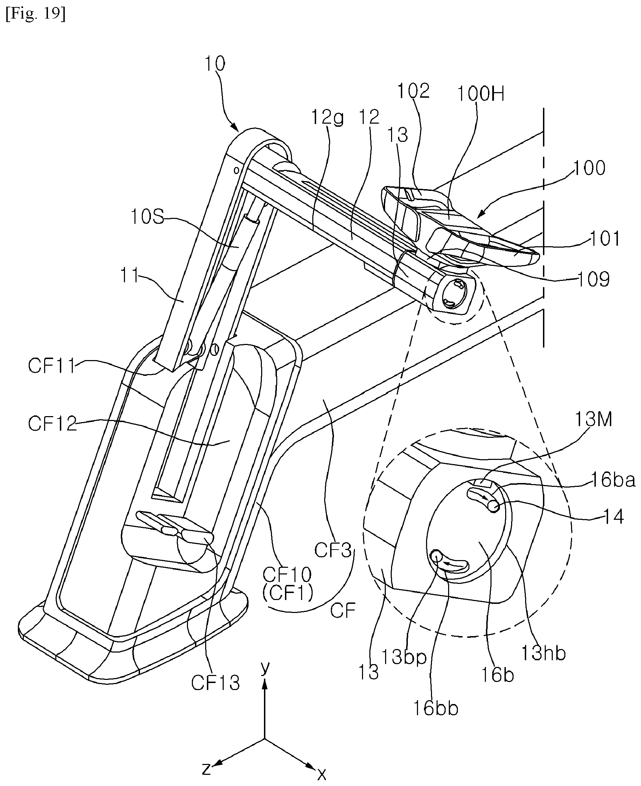

Referring to FIGS. 14 and 19, the second arm 13 and the steering wheel 100 may be rotated clockwise by a certain angle (e.g., 45 degrees). Accordingly, the steering wheel 100 may be directed toward a driver sitting in the driver's seat S1, and the driver may drive the vehicle 1 by using the steering wheel 100.

Meanwhile, after the second arm 13 and the steering wheel 100 are rotated counterclockwise by a certain angle (e.g., 45 degrees), the first and second arms 12, 13 may be folded into the housing 11 (see FIGS. 19, 14, and 9 in order). Subsequently, after a portion of the foldable bracket 10 is inserted into the frame FL, the cover 10C1 may cover the foldable bracket 10 and the steering wheel 100 (see FIGS. 9, 8, 4, and 3 in order). In this case, the steering wheel 100 may be hidden from the view of the occupant(s) inside the vehicle, and the occupant(s)' activities inside the vehicle may be more varied. Furthermore, the vehicle 1 may drive autonomously.

The operation of the steering wheel assembly described in the above paragraph may be performed automatically when an occupant selects a hidden mode (or auto mode) in a vehicle system. When the occupant selects an exposure mode (or manual mode), an operation opposite to the operation of the steering wheel assembly described in the above paragraph may be performed automatically.

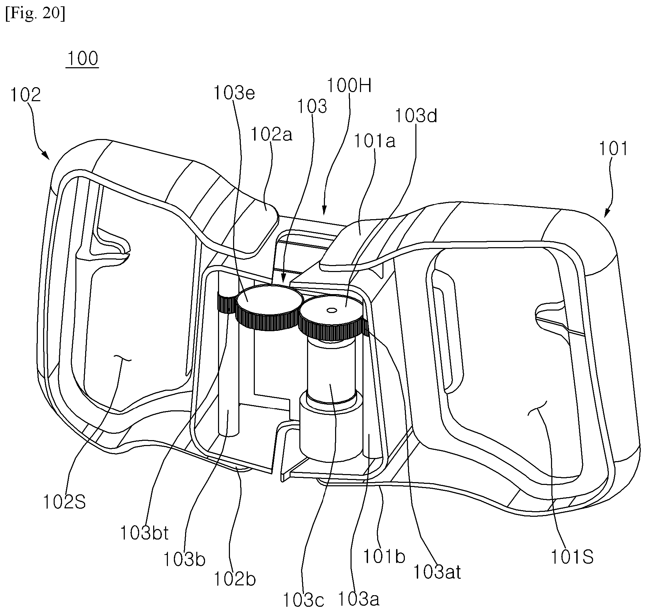

Referring to FIG. 20, the steering wheel 100 may include a housing 100H, a first rim 101, a second rim 102, and a swivel module 103. The steering wheel 100 may be referred to as a yoke steering wheel 100.

The housing 100H may have a box shape overall. The first rim 101 and the second rim 102 may be opposite to each other with respect to the housing 100H, and the steering wheel 100 may have a butterfly shape overall.

The swivel module 103 may be mounted inside the housing 100H. The swivel module 103 may include a first rotation shaft 103a, a second rotation shaft 103b, a motor 103c, a first gear 103d, and a second gear 103e.

The first rotation shaft 103a may extend long inside the housing 100H, and both ends of the first rotation shaft 103a may pass through the housing 100H. One end 101a of the first rim 101 may be fixed to one end of the first rotation shaft 103a, and the other end 101b of the first rim 101 may be fixed to the other end of the first rotation shaft 103a. A portion between both ends 101a, 101b of the first rim 101 may be spaced apart from the left side of the housing 100H to form a first space 101S. For example, the fingers of driver's left hand holding the first rim 101 may be positioned in the first space 101S.

The second rotation shaft 103b may extend long within the housing 100H, and both ends of the second rotation shaft 103b may pass through the housing 100H. One end 102a of the second rim 102 may be fixed to one end of the second rotation shaft 103b, and the other end 102b of the second rim 102 may be fixed to the other end of the second rotation shaft 103b. The portion between both ends 102a, 102b of the second rim 102 may be spaced apart from the right side of the housing 100H to form a second space 102S. For example, the fingers of driver's right hand holding the second rim 102 may be positioned in the second space 102S.

A motor 103c may be mounted inside the housing 100H. The motor 103c may be an electric motor that is able to adjust the rotational direction, rotational speed, and rotational angle of the rotation axis.

The first gear 103d may be fixed to the rotation axis of the motor 103c. The rotation axis of the first gear 103d may be parallel to the length direction of the first and second rotation shafts 103a, 103b. A first gear tooth 103at may be formed on the outer surface of the first rotation shaft 103a, and may mesh with the first gear 103d.

The second gear 103e may be opposite to the first gear tooth 103at with respect to the first gear 103d, and may mesh with the first gear 103d. A second gear tooth 103bt may be formed on the outer surface of the second rotation shaft 103b, and may mesh with the second gear 103e.

Accordingly, when the motor 103c is operated, the first and second rotation shafts 103a, 103b may be rotated in opposite directions to each other, and as a result, the first and second rims 101, 102 may be folded or spread apart.

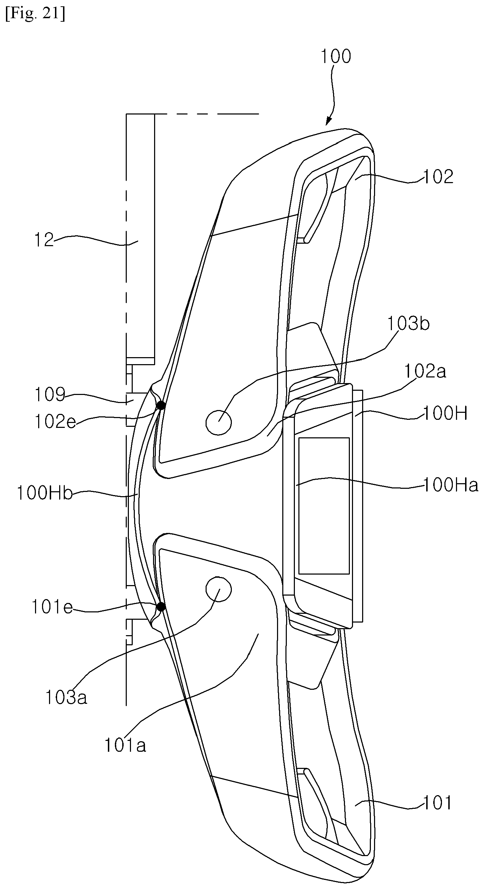

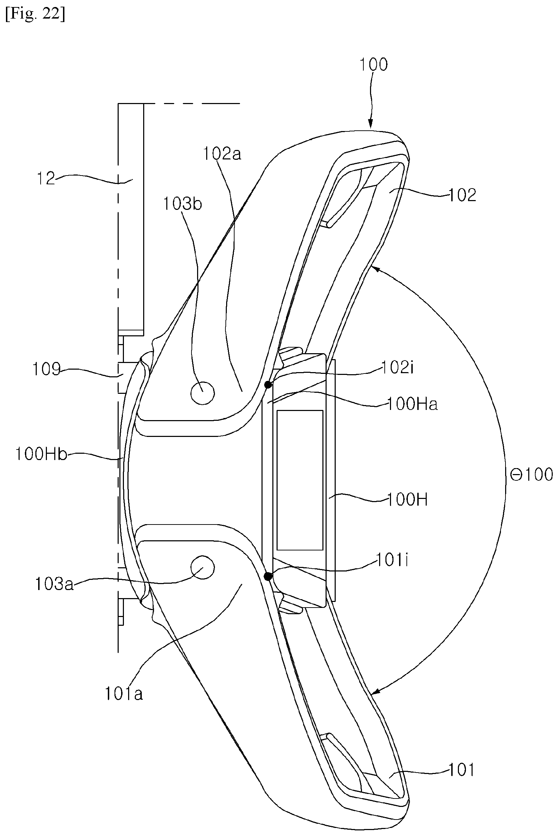

Referring to FIGS. 21 and 22, the first rim 101 may be rotated counterclockwise by a certain angle (e.g., 15 degrees), and the second rim 102 may be rotated clockwise by a certain angle (e.g., 15 degrees). Accordingly, the angle (theta 100) between the first rim 101 and the second rim 102 may be reduced, and the ease of steering wheel operation for a driver holding the first and second rims 101, 102 in their hands may be improved.

A first stopper 100Ha may be coupled to the front end of the housing 100H. The rotation of the first and second rims 101, 102, which causes an angle between the first and second rims 101, 102 to decrease, may be restricted when first and second points 101i, 102i interfere with the first stopper 100Ha.

A second stopper 100Hb may be coupled to the rear end of the housing 100H. The rotation of the first and second rims 101, 102, which causes an angle between the first and second rims 101, 102 to increase, may be restricted when third and fourth points 101e, 102e interfere with the second stopper 100Hb.

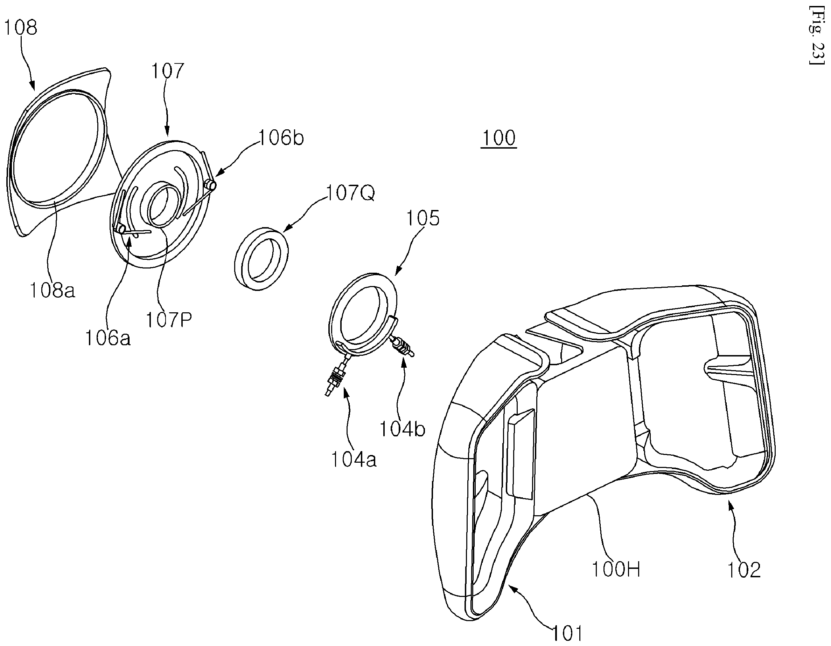

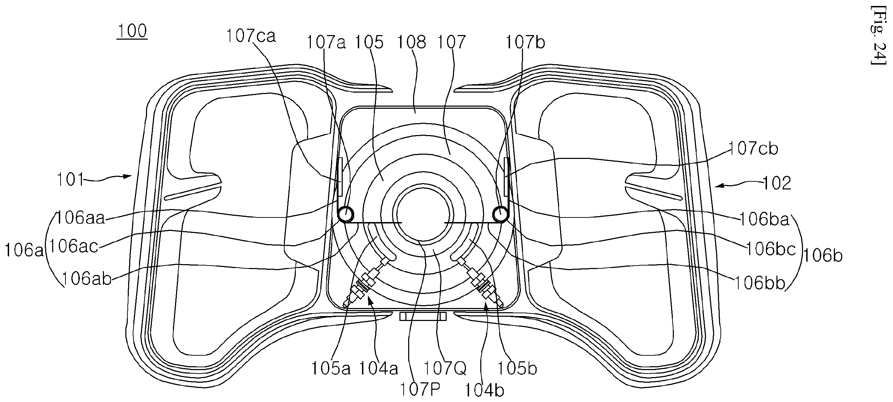

Referring to FIGS. 23 and 24, the steering wheel 100 may include a cover 108, a fixed plate 107, elastic members 106a, 106b, a rotating plate 105, and dampers 104a, 104b.

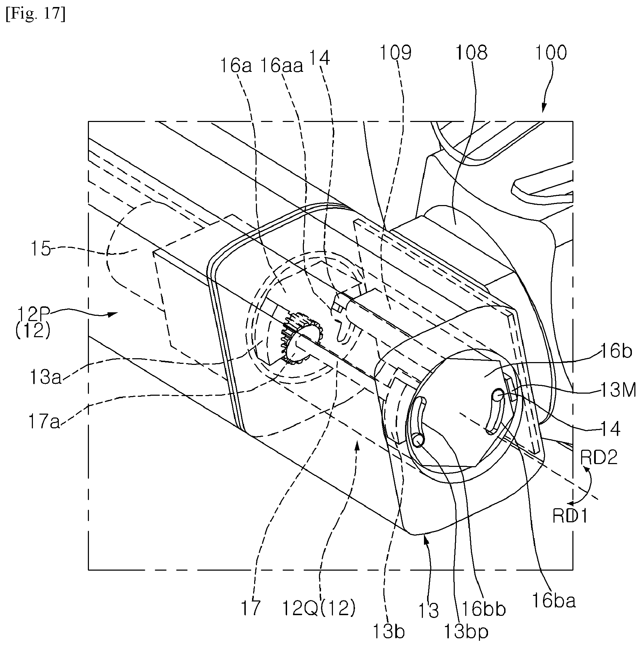

The cover 108 may form one surface of the steering wheel 100 facing the second arm 13, and may be opposite to the housing 100H (see FIG. 17). The coupling part 109 may be fixed to the cover 108 (see FIG. 17).

The fixed plate 107 may be positioned in a hole 108a of the cover 108, and may be fixed to the fixed plate 107. The hole 108a may be a circular hole, and the fixed plate 107 may have a disc or ring shape.

A first elastic member 106a may include a first part 106aa, a second part 106ab, and a third part 106ac. The third part 106ac may be wrapped around a first pin 107a formed on the fixed plate 107. The first part 106aa may extend from one end of the third part 106ac, and may form one end of the first elastic member 106a. The second part 106ab may extend from the other end of the third part 106ac in a direction intersecting with the first part 106aa, and may form the other end of the first elastic member 106a. The first part 106aa may be engaged with a first protrusion 107ca formed on the fixed plate 107. The first elastic member 106a may be a torsion spring.

A second elastic member 106b may include a first part 106ba, a second part 106bb, and a third part 106bc. The third part 106bc may be wrapped around a second pin 107b formed on the fixed plate 107. The first part 106ba may extend from one end of the third part 106bc, and may form one end of the second elastic member 106b. The second part 106bb may extend from the other end of the third part 106bc in a direction intersecting with the first part 106ba, and may form the other end of the second elastic member 106b. The first part 106ba may be engaged with a second protrusion 107b formed on the fixed plate 107. The second elastic member 106b may be a torsion spring.

A rotating plate 105 may be positioned between the fixed plate 107 and the housing 100H. The rotating plate 105 may be fixed to the housing 100H, and may be rotatably coupled to the fixed plate 107. The rotating plate 105 may have a ring shape, and may be positioned on the fixed plate 107. An inner ring 107P may be formed on the fixed plate 107, and an outer ring 107Q may be positioned between the inner ring 107P and the rotating plate 105.

A first rib 105a may be formed on one surface of the rotating plate 105 facing the housing 100H, and may have an arc shape. In the circumferential direction (i.e., rotational direction) of the rotating plate 105, the second part 106ab of the first elastic member 106a may be positioned on the movement trajectory of the first rib 105a.

A second rib 105b may be formed on one surface of the rotating plate 105 facing the housing 100H, and may have an arc shape. In the circumferential direction (i.e., rotational direction) of the rotating plate 105, the second part 106bb of the second elastic member 106b may be positioned on the movement trajectory of the second rib 105b.

The first damper 104a may have a damping function. The first damper 104a may be mounted on the cover 108 and/or the fixed plate 107, and may correspond to the first rib 105a.

The second damper 104b may have a damping function. The second damper 104b may be mounted on the cover 108 and/or the fixed plate 107, and may correspond to the second rib 105b.

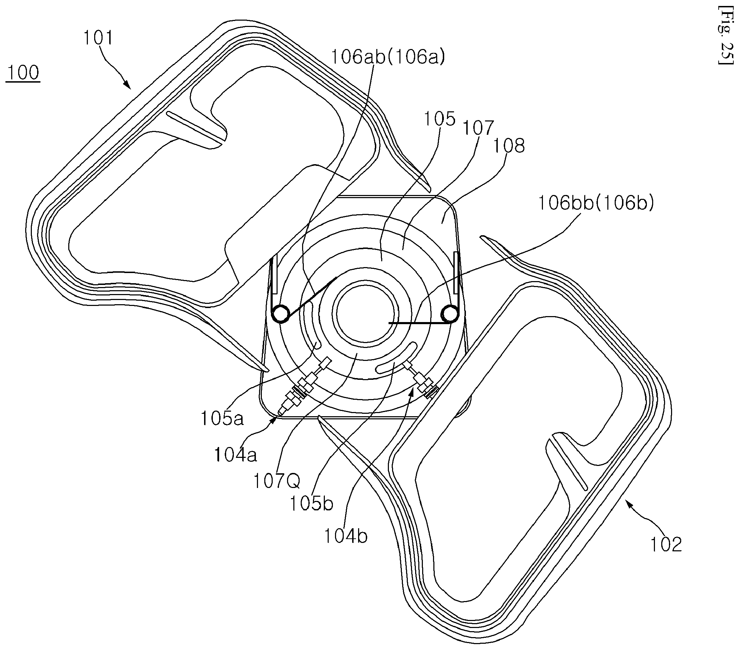

Referring to FIG. 25, a driver may rotate the steering wheel 100 clockwise. At this time, the rotating plate 105 of the steering wheel 100 may be rotated clockwise, and the first rib 105a may push the second part 106ab of the first elastic member 106a, and as a result, the first elastic member 106a may be elastically deformed. In addition, the second damper 104b may come into contact with the second rib 105b.

Accordingly, when a driver releases his/her hand from the steering wheel 100, the steering wheel 100 may be rotated counterclockwise by the restoring force of the first elastic member 106a and returned to its original state. At this time, the second damper 104b in contact with the second rib 105b of the rotating plate 105 may slow down the return speed of the steering wheel 100.

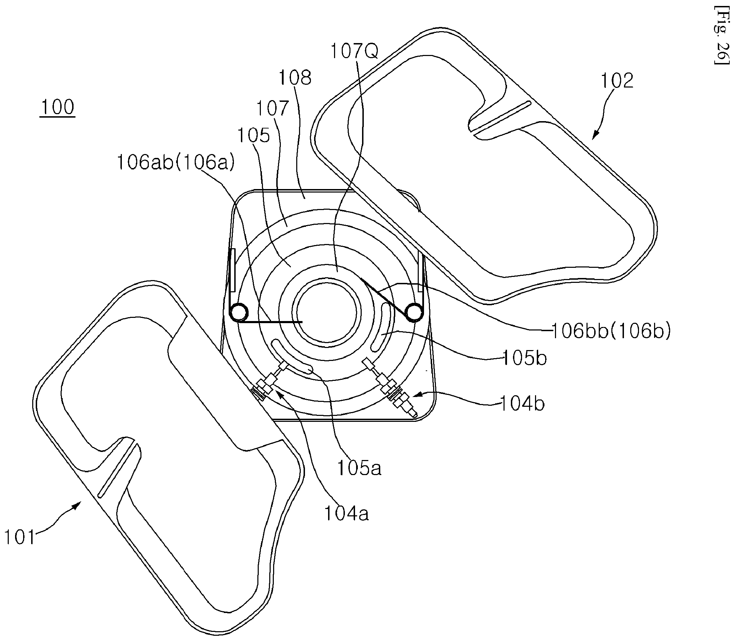

Referring to FIG. 26, a driver may rotate the steering wheel 100 counterclockwise. At this time, the rotating plate 105 of the steering wheel 100 may be rotated counterclockwise, and the second rib 105b may push out the second part 106bb of the second elastic member 106b, and as a result, the second elastic member 106b may be elastically deformed. In addition, the first damper 104a may be in contact with the first rib 105a.

Accordingly, when a driver releases his/her hand from the steering wheel 100, the steering wheel 100 may be rotated clockwise and returned to its original state by the restoring force of the second elastic member 106b. At this time, the first damper 104a in contact with the first rib 105a of the rotating plate 105 may slow down the return speed of the steering wheel 100.

Referring to FIGS. 1 to 26, a steering wheel assembly according to an aspect of the present disclosure may include: a frame; a housing extending in a direction intersecting with the frame: an arm which is adjacent to an end of the housing, and which extends in a direction intersecting with the housing; and a steering wheel coupled to a distal end of the arm, wherein the arm may be foldably coupled to the housing.

The steering wheel may further include a supporter which is positioned between the housing and the arm, and which extends in a direction intersecting with the housing and the arm, one end of the supporter may be pivotably coupled to the housing, and the other end of the supporter may be pivotably coupled to the arm.

The supporter may be a linear actuator, and the supporter may have a first length, when the arm intersects with the housing, and may have a second length shorter than the first length, when the arm is parallel to the housing.

The steering wheel assembly may further include a fixed part extending in a length direction of the housing from the frame, and the housing may be movably coupled to the fixed part along the fixed part.

The steering wheel assembly may further include: a motor mounted on the fixed part; a lead screw which extends in a length direction of the fixed part, and which is fixed to a rotation axis of the motor; and a slider which is coupled to the lead screw to be movable in a length direction of the lead screw, wherein the slider may be formed in the housing or fixed to the housing.

The steering wheel may be detachably coupled to the fixed part, when the arm is folded toward the housing so as to be parallel to the housing, and the arm may be movable together with the housing along the fixed part, while the steering wheel is fixed to the fixed part.

The steering wheel may include a coupling part protruding from the steering wheel toward the arm, and the arm may include a guide slot which is formed elongated in a length direction of the arm, and into which the coupling part is movably inserted.

The steering wheel assembly may further include: a cable which has one end electrically connected to the steering wheel, and has a portion positioned in the housing and the arm; a first pulley adjacent to the frame; a second pulley adjacent to the distal end of the housing; and a tension pulley which is positioned between the first pulley and the other end of the cable, wherein the cable may be engaged with the tension pulley and the first and second pulleys, and may be positioned between the one end and the other end of the cable, and the tension pulley may pull the cable in a direction from the one end of the cable toward the other end.

The steering wheel assembly may further include: a foldable bracket including the housing and the arm; and a cover which is coupled to the fixed part so as to be movable in a direction toward or away from the fixed part, wherein the cover may cover the steering wheel and the foldable bracket that are coupled to the fixed part, or may expose them to the outside.

The steering wheel assembly may further include: a motor mounted on the fixed part; a pinion fixed to a rotation axis of the motor; and a rack which is formed at a bottom of the cover, which extends in a movement direction of the cover, and which is engaged with the pinion.

The arm may include: a first arm forming a first portion of the arm; and a second arm which forms a second portion of the arm, and which is coupled to the steering wheel, wherein the second arm may be coupled to the first arm so as to be rotatable about a longitudinal axis of the arm.

The steering wheel assembly may further include: a motor which is mounted inside the first arm, and which provides power to the second arm; a gear which is positioned inside the second arm, and which is fixed to a rotation axis of the motor; and a rack which is formed on an inner surface of the second arm, and which is engaged with the gear.

The steering wheel may include: a housing; a first rim rotatably coupled to a first side of the housing; a second rim rotatably coupled to a second side of the housing opposite to the first side; and a swivel module which is mounted inside the housing, and which rotates the first rim and the second rim in opposite directions.

The steering wheel may include: a housing; a rim coupled to a side surface of the housing; a fixed plate which is opposite to the housing, and which is fixed to the arm; an elastic member which is positioned on one surface of the fixed plate facing the housing; a rotating plate which is positioned between the housing and the fixed plate, which is fixed to the housing, and which is rotatably coupled to the fixed plate; and a damper mounted on the housing, wherein the rotating plate may include a rib which is formed on one surface of the rotating plate facing the housing, and which moves closer to or further away from the elastic member as the rotating plate rotates, and the damper may be in contact with the rib of the rotating plate which rotates by a restoring force of the elastic member.

A vehicle may include: the steering wheel assembly; and wheels mounted on the frame of the steering wheel assembly.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

The above detailed description should not be construed as restrictive in all respects and should be considered as illustrative. The scope of the present disclosure should be determined by a reasonable interpretation of the appended claims, and all modifications within the equivalent scope of the present disclosure are included in the scope of the present disclosure.

## Claims

1. A steering wheel assembly comprising:
a frame;
a housing extending in a direction intersecting with the frame;
an arm which is adjacent to an end of the housing, and which extends in a direction intersecting with the housing; and
a steering wheel coupled to an end of the arm,
wherein the arm is foldably coupled to the housing.

2. The steering wheel assembly of claim 1, further comprising a supporter
which is positioned between the housing and the arm, and which extends in a direction intersecting with the housing and the arm,
wherein one end of the supporter is pivotably coupled to the housing, and
wherein the other end of the supporter is pivotably coupled to the arm.

3. The steering wheel assembly of claim 2, wherein the supporter is a linear actuator, and
wherein the supporter has a first length, when the arm intersects with the housing, and
wherein the supporter has a second length shorter than the first length, when the arm is parallel to the housing.

4. The steering wheel assembly of claim 1, further comprising a fixed part
extending in a length direction of the housing from the frame,
wherein the housing is movably coupled to the fixed part along the fixed part.

5. The steering wheel assembly of claim 4, further comprising:
a motor mounted on the fixed part;
a lead screw which extends in a length direction of the fixed part, and which is fixed to a rotation axis of the motor; and
a slider which is coupled to the lead screw to be movable in a length direction of the lead screw,
wherein the slider is formed in the housing or fixed to the housing.

6. The steering wheel assembly of claim 4, wherein the steering wheel is
detachably coupled to the fixed part, when the arm is folded toward the housing so as to be parallel to the housing, and
the arm is movable together with the housing along the fixed part, while the steering wheel is fixed to the fixed part.

7. The steering wheel assembly of claim 6, wherein the steering wheel
comprises a coupling part protruding from the steering wheel toward the arm, and
the arm comprises a guide slot which is formed elongated in a length direction of the arm, and into which the coupling part is movably inserted.

8. The steering wheel assembly of claim 6, further comprising:
a cable which has one end electrically connected to the steering wheel, and
which has a portion positioned in the housing and the arm;
a first pulley adjacent to the frame;
a second pulley adjacent to the end of the housing; and
a tension pulley which is positioned between the first pulley and the other end of the cable,
wherein the cable is engaged with the tension pulley and the first and second pulleys, and is positioned between the one end and the other end of the cable, and
wherein the tension pulley pulls the cable in a direction from the one end of the cable toward the other end.

9. The steering wheel assembly of claim 6, further comprising:
a foldable bracket including the housing and the arm; and
a cover which is coupled to the fixed part so as to be movable in a direction toward or away from the fixed part,
wherein the cover covers the steering wheel and the foldable bracket that are coupled to the fixed part, or exposes them to the outside.

10. The steering wheel assembly of claim 9, further comprising:
a motor mounted on the fixed part;
a pinion fixed to a rotation axis of the motor; and
a rack which is formed at a bottom of the cover, which extends in a movement direction of the cover, and which is engaged with the pinion.

11. The steering wheel assembly of claim 1, wherein the arm comprises:
a first arm forming a first portion of the arm; and
a second arm which forms a second portion of the arm, and which is coupled to the steering wheel,
wherein the second arm is coupled to the first arm so as to be rotatable about a longitudinal axis of the arm.

12. The steering wheel assembly of claim 11, further comprising:
a motor which is mounted inside the first arm, and which provides power to the second arm;
a gear which is positioned inside the second arm, and which is fixed to a rotation axis of the motor; and
a rack which is formed on an inner surface of the second arm, and which is engaged with the gear.

13. The steering wheel assembly of claim 1, wherein the steering wheel comprises:
a housing;
a first rim rotatably coupled to a first side of the housing;
a second rim rotatably coupled to a second side of the housing opposite to the first side; and
a swivel module which is mounted inside the housing, and which rotates the first rim and the second rim in opposite directions.

14. The steering wheel assembly of claim 1, wherein the steering wheel comprises:
a housing;
a rim coupled to a side surface of the housing;
a fixed plate which is opposite to the housing, and which is fixed to the arm;
an elastic member which is positioned on one surface of the fixed plate facing the housing;
a rotating plate which is positioned between the housing and the fixed plate,
which is fixed to the housing, and which is rotatably coupled to the fixed plate; and
a damper mounted on the housing,
wherein the rotating plate comprises a rib which is formed on one surface of the rotating plate facing the housing, and which moves closer to or further away from the elastic member as the rotating plate rotates, and
wherein the damper is in contact with the rib of the rotating plate which rotates by a restoring force of the elastic member.

15. A vehicle comprising:
a steering wheel assembly of claim 1; and
wheels mounted on the frame of the steering wheel assembly.
